(19) Europäisches Patentamt
European Patent Office
Office européen des brevets

(11) Veröffentlichungsnummer : **0 039 314**
**B1**

(12) **EUROPÄISCHE PATENTSCHRIFT**

(45) Veröffentlichungstag der Patentschrift : **04.07.84**

(51) Int. Cl.³ : **C 23 F 11/16**, C 07 F 9/09, A 62 D 1/00

(21) Anmeldenummer : **81810163.6**

(22) Anmeldetag : **29.04.81**

# (54) Verwendung von Phosphorsäurediestern als Korrosionsinhibitoren.

(30) Priorität : **30.04.80 CH 3345/80**
**20.06.80 CH 4756/80**
**09.01.81 CH 126/81**

(43) Veröffentlichungstag der Anmeldung : **04.11.81 Patentblatt 81/44**

(45) Bekanntmachung des Hinweises auf die Patenterteilung : **04.07.84 Patentblatt 84/27**

(84) Benannte Vertragsstaaten :
**AT BE CH DE FR GB IT LI NL SE**

(56) Entgegenhaltungen :
**AT-B- 235 149**
**US-A- 3 488 289**
**US-A- 3 502 587**
**US-A- 3 510 436**
**US-A- 3 846 071**
**DR. OTTO-ALBRECHT NEUMÜLLER, "Römpps Chemie-Lexikon", 7. Auflage, Teil 4, 1974 FRANCKH'SCHE VERLAGSHANDLUNG, W. Keller & co., Stuttgart, Seiten 2650-2653**
**Die Akte enthält technische Angaben, die nach dem Eingang der Anmeldung eingereicht wurden und die nicht in dieser Patentschrift enthalten sind.**

(73) Patentinhaber : **SANDOZ AG**
**Lichtstrasse 35**
**CH-4002 Basel (CH)**

(72) Erfinder : **Danner, Bernard**
**8bis rue du Beau Site**
**F-68400 Riedisheim (FR)**
Erfinder : **Mau, Hartmut**
**In der Vorstadt 4**
**D-7859 Istein (DE)**
Erfinder : **Stettler, Hans**
**Hirzbodenweg 17**
**CH-4000 Basel (CH)**

**EP 0 039 314 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft die Verwendung von ausgewählten Phosphorsäurediestern, gegebenenfalls im Gemisch mit weiteren Zusatzstoffen, als Korrosionsinhibitoren, insbesondere zur Verminderung der Sauerstoff verbrauchenden Korrosion von metallischen Werkstoffen.

Aus der US-Patentschrift 3'510'436 ist es bekannt, organische Phosphorsäureester zusammen mit einer wasserlöslichen Zinkverbindung und/oder Mercaptobenzothiazol als Korrosionsinhibitoren in wässrigen Systemen zu verwenden. Es wurde nun gefunden, dass ausgewählte organische Phosphorsäureester, wie solche im weiteren beschrieben sind, eine besonders ausgeprägte antikorrosive Wirkung zeigen und in industriellem Masstab einsetzbar sind.

Die vorliegende Erfindung betrifft insbesondere die Verwendung von Phosphorsäurediestern der Formel

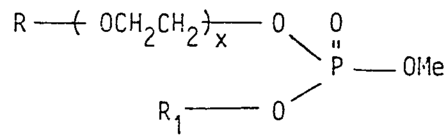

(I)

worin

R Alkyl($C_{8-18}$),

$R_1$ Alkyl($C_{1-5}$),

x 3-12 und

Me Na, K, 1/2 Ca oder 1/2 Zn

bedeuten, gegebenenfalls in Gegenwart von Mercaptobenzothiazolverbindungen und/oder Benzotriazolverbindungen und/oder Natriumboroheptonat und/oder Zinksalzen, zur Verminderung der Korrosion vom Sauerstofftypus bei metallischen Werkstoffen.

In der obigen Formel (I) bedeutet R vorzugsweise R', d. h. Alkyl($C_{12-16}$).

$R_1$ bedeutet vorzugsweise $R_1'$, d. h. Alkyl($C_{2-4}$), vorzugsweise $R_1''$, d. h. Alkyl($C_{3,4}$).

R und $R_1$ sind vorzugsweise linear.

x bedeutet vorzugsweise x', d. h. 6-9. Diese Zahlen sind Durchschnittswerte.

Me bedeutet vorzugsweise Me', d. h. Na, K oder 1/2 Zn.

Bevorzugt sind die Verbindungen der Formeln

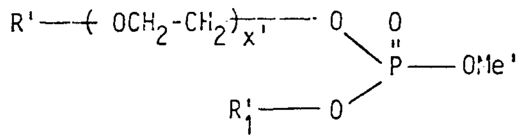

(Ia)

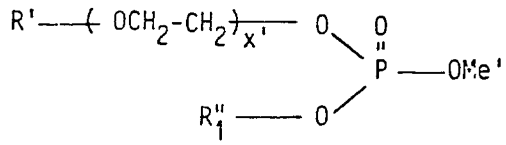

(Ib)

Die Verbindungen der Formel (I) (im weiteren als Komponente [a] bezeichnet) verwendet man vorzugsweise im Gemisch mit weiteren Zusatzstoffen. Solche weitere Zusatzstoffe (im weiteren als Komponente [b] bezeichnet) sind Mercaptobenzothiazolverbindungen und/oder Benzotriazolverbindungen und/oder Natriumboroheptonat.

Solche Zusatzstoffe (im weiteren als Komponente [c] bezeichnet) sind auch Mittel zur Einstellung des pH-Wertes, Biozide, Mittel zur Verhinderung der Krustenbildung auf den zu schützenden Metallteilen (durch vorwiegend Calziumablagerungen), leicht oxydierend wirkende Agenzien und/oder Netzmittel.

Die Verwendung als Korrosionsinhibitoren ist bevorzugt für Kupfer, Eisen, Zink, Aluminium und solche Metalle enthaltende Werkstoffe, insbesondere in Elektrolyten mit schwach saurem bis schwach basischem Charakter.

Die Erfindung betrifft im weiteren Verfahren zur Verminderung der Korrosion vom Sauerstofftypus bei metallischen Werkstoffen in Elektrolyten mit schwach saurem bis schwach alkalischem Charakter, dadurch gekennzeichnet, dass man diesen Elektrolyten mindestens eine Verbindung der Komponente [a] und gegebenenfalls der Komponente [b] sowie gegebenenfalls der Komponente [c] in einer Konzentration von zusammen mindestens 10 ppm (bezogen auf das Gewicht des Elektrolyten) zusetzt.

Als Komponente [b] setzt man als Benzothiazolverbindung vorzugsweise unsubstituiertes Merkaptobenzothiazol bzw. das Alkalimetallsalz ein. Als Benzotriazolverbindungen kommen vor allem unsubstituiertes Benzotriazol oder Tolyltriazol in Frage. Bevorzugt sind Benzotriazol, Tolyltriazol und/oder Natriumboroheptonat, vorzugsweise Benzotriazol und/oder Natriumboroheptonat. Diese Verbindungen sind an sich bekannt.

Vorzugsweise verwendet man immer die Komponenten [a] mit mindestens einer Verbindung der Komponente [b], vorzugsweise die Komponenten [a] mit mindestens je einer Verbindung der Komponenten [b] und [c].

Als Mittel zur Einstellung des pH-Wertes kommen an sich bekannte Verbindungen in Frage wie z. B. Natronlauge, Natriumkarbonat, Natriumbikarbonat, Dinatriumphosphat, Mononatriumphosphat, Natriumacetat, Monoäthanolamin, Diäthanolamin, Triäthanolamin, vorzugsweise Mono- oder Diäthanolamin, vorzugsweise Monoäthanolamin.

Als Biozid kann jedes an sich bekannte Biozid verwendet werden, das unter den gegebenen Bedingungen stabil ist. Beispiele für solche Biozide sind Formaldehyd, p-Chlorphenyl-propandiol, Dilauryldimethylammoniumchlorid, das Na-Salz von o-Phenylphenol, 5,5'-Dichloro-2,2'-dihydroxydiphenylmethan, p-Chlor-meta-xylenol, Octachlorcyclohexan, quarternäre Ammoniumverbindungen, 2,2'-Dichlor-5,5'-dihydroxydiphenyl. Solche Verbindungen sind z. B. beschrieben in TAPPI, December 1969, Vol. 52, Nr. 12.

Bevorzugt verwendet man als Biozid 5,5'-Dichloro-2,2'-dihydroxydiphenylmethan.

Beispiele für Mittel zur Verhinderung von Krustenbildungen sind Hydroxycarboxylate (Glukonate, Heptonate), Amino-Carboxylate (wie z. B. die Natriumsalze der Nitrilotriessigsäure, Ethylendiamintetraessigsäure oder Diäthylentriamino-penta-essigsäure), Citronensäure. Solche Mittel sind z. B. beschrieben in « Textil Chemist & Colorist » Vol. 10, Nr. 8, 1978.

Vorzugsweise verwendet man Glukonsäure, Mannonsäure und verwandte Verbindungen wie auch Salze weiterer organischer Säuren, z. B. Natriumheptonat.

Als leicht oxydierend wirkendes Agens verwendet man vorzugsweise Nitrationen. Als Netzmittel kommen vorzugsweise die an sich bekannten nicht-ionogenen Verbindungen in Frage.

Ein Verfahren zur Herstellung der Verbindungen der Formel (I) ist dadurch gekennzeichnet, dass man 1 Mol $POCl_3$ mit je 1 Mol der Verbindungen

$$R(OCH_2CH_2)_x\text{-}OH \qquad (II)$$

und

$$R_1\text{—}OH \qquad (III)$$

nacheinander in beliebiger Reihenfolge unter Abspaltung von 2 Mol HCl umsetzt und das erhaltene Produkt, gegebenenfalls unter gleichzeitiger Umwandlung in das entsprechende Salz gemäss der Bedeutung von Me, hydrolysiert.

Die Umsetzungsbedingungen sind aus analogen Reaktionen bekannt. Vorzugsweise arbeitet man bei der ersten Stufe der Umsetzung, d. i. beispielsweise die Umsetzung mit einer Verbindung der Formel (II), mit einem Ueberschuss an $POCl_3$, wobei man anschliessend das überschüssige $POCl_3$ entfernt und erst dann mit der Verbindung der Formel (III) umsetzt.

Die Hydrolyse geschieht in an sich bekannter Weise mit Wasser, wobei dieses, insofern Me von Wasserstoff verschieden ist, das entsprechende Kation enthält und der pH des Reaktionsgemisches vorzugsweise neutral bis schwach basisch eingestellt wird. Natürlich kann auch zuerst nur mit Wasser hydrolysiert und anschliessend durch Zugabe der entsprechenden Base das Salz hergestellt werden.

Zur Herstellung der Verbindungen der Formel (I) kann man auch in an sich bekannter Weise Phosphorpentoxid oder auch Phosphoroxychlorid mit den entsprechenden molaren Mengen der Verbindungen (II) und (III) im Gemisch umsetzen, indem man z. B. ein äquimolares Gemisch der Verbindungen (II) und (III) mit Phosphorpentoxid auf bis zu 95 °C, vorzugsweise auf ca. 60 °C erhitzt. Dabei erhält man Gemische. Ein solchermassen erhaltenes Gemisch kann man ebensosehr als korrosionsminderndes Mittel einsetzen. Die aktive Komponente ist dabei diejenige der Formel (I).

Bei der erfindungsgemässen Verwendung sind vorzugsweise immer auch Zinkionen anwesend. Verwendet man das Alkalisalz der Verbindung der Formel (I), so setzt man das Zink in Form eines Zinksalzes zu. Bevorzugt verwendet man die Verbindung der Formel (I) als Alkalisalz in Gegenwart von Zinknitrat. Auch die Komponenten [b] und [c] sind vorzugsweise in Wasser löslich. Dabei ist natürlich das Verhältnis der Aktivsubstanzen zueinander, d. h. vor allem der Komponenten [a] und [b] wichtig. Diese können einem Elektrolyten oder einer anderen Trägersubstanz zugesetzt werden.

Dabei enthält der Elektrolyt (meistens Wasser) vorzugsweise mindestens 10 ppm der Verbindung der Formel (I), vorzugsweise mindestens 30 ppm (bezogen auf den Elektrolyten). Die obere Konzentrationsgrenze ist unkritisch. Eine obere Konzentration von 1 000 ppm genügt in der Regel für alle Ansprüche. Die optimale Konzentration beträgt ca. 50-200 ppm, vorzugsweise 60-150 ppm, vorzugsweise ca. 100 ppm. Enthält der Elektrolyt korrodierend wirkende Substanzen, so ist der Gehalt an der Verbindung der Formel (I) entsprechend höher. Vorzugsweise verwendet man das Alkalimetallsalz und/oder das Zinksalz der Verbindung der Formel (I). Ist es erwünscht, die Zinkionenkonzentration

niedrig zu halten, so stellt man das Gewichtsverhältnis der Formel (I) zu den $Zn^{+2}$-Ionen vorzugsweise auf $10^4 : 5$ bis $10^4 : 1$, vorzugsweise $10^4 : 4$ bis $10^4 : 1$ und vorzugsweise ca. $10^4 : 2$ ein, wobei man optimale Effekte erhält.

Dabei beträgt die Konzentration an Zinkionen vorzugsweise mindestens 0.001 ppm (bezogen auf den Elektrolyten). Die obere Grenze ist unkritisch. Eine Konzentration von 5 ppm genügt in der Regel. Die für die Praxis bevorzugte Konzentration liegt aber bei 0.001-0.5 ppm, vorzugsweise 0.01-0.5 ppm, vorzugsweise 0.01-0.1 ppm, vorzugsweise 0.02-0.03 ppm. Dieselben wie für Zink gelten auch für das Nitration bzw. den oxydierend wirkenden Zusatzstoff.

Die Konzentration (bezogen auf den Elektrolyten) der Komponente [b] beträgt vorzugsweise mindestens 50 ppm, vorzugsweise 50-1 000 ppm. Die obere Grenze ist aber unkritisch.

Eine Konzentration von 100 ppm genügt in der Regel. Vorzugsweise beträgt die Konzentration 50 ppm bis 500 ppm, vorzugsweise ca. 100 ppm.

Die Konzentration (bezogen auf den Elektrolyten) der Verbindung zur Regulierung des pH-Wertes hängt vom Neutralisierungsgrad der Mischung ab und beträgt vorzugsweise 20-1 000 und vorzugsweise 30-300 ppm.

Die Konzentration (bezogen auf den Elektrolyten) des Biozids beträgt vorzugsweise höchstens 800 ppm, vorzugsweise 50 ppm bis 150 ppm.

Die Konzentration des Mittels zur Verhinderung der Krustenbildung beträgt vorzugsweise höchstens 1 000, vorzugsweise 30-600 ppm.

Die Konzentration des Netzmittels beträgt höchstens 25 % bezogen auf die Aktivsubstanz.

Die oben angegebenen Konzentrationen sind weitgehend unkritisch, wobei also die gesamte zugegebene Menge der Zusammensetzung bei 500-2 000 ppm liegt.

Als Elektrolyte kommen in der Praxis alle Flüssigkeiten in Frage, welche entweder wässrige Systeme sind oder Wasser in geringen Mengen enthalten oder abscheiden. Darunter fallen Wasser, Gemische von Wasser mit organischen Verbindungen (z. B. Wasser/Glykolmischungen) oder Erdölprodukte.

Als schwach sauren bis schwach alkalischen Charakter wird ein pH von ca. 3 bis 10, vorzugsweise 5 bis 9 und vorzugsweise 6-8,5 bezeichnet.

Mittels der erfindungsgemässen Zusammensetzung wird die sauerstoffverbrauchende Korrosion von Werkstoffen stark vermindert, vor allem von Kupfer, Eisen, Zink oder Aluminium, einer Kombination solcher Metalle oder Legierungen enthaltend eines oder mehrere dieser Metalle. Die erfindungsgemässe Zusammensetzung kann für alle gängigen Werkstoffe Verwendung finden. Solche Werkstoffe sind beispielsweise in Wellinger-Gimmel-Bodenstein, Werkstoff-Tabellen der Metalle, 7. Auflage, Alfred Kröner Verlage, Stuttgart, beschrieben.

Man kann die korrosionsmindernden Verbindungen als Mischung zusammen oder nacheinander wie bereits erwähnt direkt im Elektrolyten auflösen. Man kann die Verbindungen aber auch in Form eines Mittels anwenden, beispielsweise in Form einer Suspension, welche den Korrosionsinhibitor langsam in Lösung abgibt. Man kann aber auch den zu schützenden Werkstoff mit einem Mittel, beispielsweise mit einem Lack, welcher den Korrosionsinhibitor enthält, bestreichen, um die korrosionsinhibitierende Wirkung zu erreichen, oder auch die Verbindungen aus einer wässrigen oder wässrig-öligen Suspension aufsprühen oder durch Tauchen aufbringen, wobei in diesem Fall den behandelten z. B. blanken Metallteilen ein sehr guter Temporärschutz verliehen wird. Die Erfindung betrifft deshalb auch ein Mittel zur Verminderung der Korrosion vom Sauerstofftypus bei metallischen Werkstoffen, dadurch gekennzeichnet, dass dieses eine Verbindung der Formel (I) sowie gegebenenfalls weitere Zusatzstoffe enthält. Solche Mittel sind beispielsweise Lösungen der Zusammensetzung in Wasser, Aethylenglykol, Alkoholen oder verwandten Verbindungen oder Anstrichstoffen, wie an sich bekannte Lacksysteme oder Suspensionen, z. B. wässrige oder ölig-wässrige Suspensionen, welche eine erfindungsgemässe Zusammensetzung und gegebenenfalls weitere Zusatzstoffe enthalten. Solche Mittel enthalten z. B. 1-60 Gew.% der Verbindung der Formel (I) zusammen mit gegebenenfalls weiteren Zusatzstoffen. Die Herstellung solcher Mittel ist an sich bekannt. Sie Werden für den praktischen Einsatz, je nach Bedarf, verdünnt.

Die Erfindung betrifft auch Verfahren zum temporären Schützen von blanken Metallteilen, dadurch gekennzeichnet, dass man auf diese eine Verbindung der Formel (I) mit gegebenenfalls weiteren Zusatzstoffen, z. B. aus einer wässrigen oder wässrig-öligen Suspension, aufbringt.

Spezifische Anwendungsgebiete sind im weiteren offene oder geschlossene Heiz- oder Kühlkreisläufe, wie z. B. Zentralheizungen oder Kühlsysteme von Verbrennungsmotoren, denen man die erfindungsgemässen Mischungen mit Vorteil zusetzt. Im Rahmen einer ausgewählten Anwendung bezieht sich die Erfindung auch auf an sich bekannte Schaumlöschzusammensetzungen, die zum Löschen von Bränden mittels Schaumlöschern versprüht werden, welche 0,5-10 Gew.% einer Verbindung der Formel (I), gegebenenfalls zusammen mit weiteren Zusatzstoffen, enthalten. Solche Zusammensetzungen sind geeignet, nach der Verwendung, bzw. nach dem Löschen eines Brandes, weiteren Schaden durch Korrosion zu vermindern.

Ein Verfahren zur Korrosionshemmung von Maschinenteilen bei der Papierherstellung ist dadurch gekennzeichnet, dass man eine Fasersuspension verwendet, welche eine Verbindung der Formel (I), gegebenenfalls zusammen mit weiteren Zusatzstoffen, in den angegebenen Konzentrationen enthält. Die Verbindungen der Formel (I) können natürlich noch in zahlreichen weiteren spezifischen Verwendungsformen zur Korrosionshemmung verwendet werden.

Die nachfolgenden Beispiele illustrieren die Erfindung.

Beispiel 1

460,5 Teile Phosphoroxychlorid werden in einem mit Rührer, Thermometer, Tropftrichter, Rückflusskühler und Gaseinleinleitungsrohr versehenen Vierhalssulfierkolben geladen und auf ca. − 10 °C abgekühlt. Unter Einleiten von Stickstoff werden sodann innert ca. 10 Stunden 508,0 Teile des Anlagerungsproduktes von 7 Mol Aethylenoxid an 1 Mol Tridecylalkohol dem Phosphoroxychlorid zugetropft.

Während der gesamten Umsetzung wird die Temperatur unter 30 °C gehalten. Sobald 36,5 Teile Salzsäure sich entwickelt haben, wird das überschüssige Phosphoroxychlorid unter Vakuum abdestilliert. Man erhält ein öliges Produkt, das der allgemeinen Formel

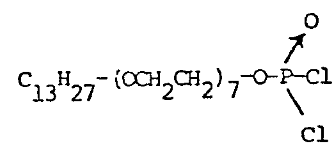

entspricht.

625,0 Teile dieses Produktes werden sodann mit 74,0 Teilen n-Butanol in Gegenwart von Tetrachlorkohlorkohlenstoff als Lösungsmittel bei 25-30 °C weiter umgesetzt. Sobald 36,5 Teile Salzsäure sich entwickelt haben, wird das Lösungsmittel unter Vakuum abdestilliert. Man erhält ein öliges Produkt, das der allgemeinen Formel

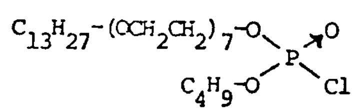

entspricht.

662,5 Teile dieses Produktes werden bei Raumtemperatur mit 133,0 Teilen Natronlauge, 30 %-ig, verseift. Man erhält eine 84 %-ige wässrige Lösung eines Phosphorsäureesters, das der allgemeinen Formel

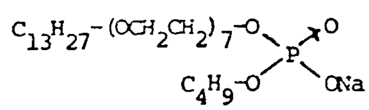

entspricht.

Beispiel 2

1 040 Teile n-Butanol und 265 Teile eines Additionsproduktes von 7 Mol Aethylenoxid and 1 Mol Tridecylalkohol werden gemischt und zu 550 Teilen $P_2O_5$ zugetropft, wobei die Temperatur unter 60 °C gehalten wird. Das Produkt wird mit 1 430 Teilen 30 %-iger wässriger Natronlauge neutralisiert.

In analoger Weise zu den Beispielen 1 und 2 stellt man die weiteren Verbindungen der Tabelle 1 her.

Beispiel 3

67,0 Teile der gemäss Beispiel 1 erhaltenen 84 %-igen Lösung der Verbindung Nr. 6 der Tabelle 1 werden mit 585 Teilen Wasser gemischt.

Bei Raumtemperatur werden nun unter mässigem Rühren 80,0 g Dichloro-dihydroxydiphenol zugegeben und verrührt, bis eine klare Flüssigkeit vorliegt. Anschliessend werden 90,0 g Natrium-boroheptonat zugegeben, dabei entsteht eine klare Lösung. Portionenweise wird in diese Lösung 100,0 g Benzotriazol eingerührt, dabei wird die Lösung trüb and man kann Ausfällungen eines Produktes beobachten. Durch Zugabe von 65,0 g Monoäthanolamin unter fortgesetztem Rühren findet eine leichte Erwärmung der Masse statt. Es wird so lange gerührt, bis wieder eine klare Lösung vorliegt. Zum Schluss werden noch 5,0 g einer 1 %-igen Zinknitrat-Lösung zugegeben und kurz verrührt. Der pH des Endproduktes beträgt 9-10.

Die Zusammensetzungen gemäss der Tabellen 2 und 3 stellt man in analoger Weise her.

Beispiel 4

Die chemischen Korrosionsuntersuchungen werden nach DIN 50 905, Blatt 1 und 2 durchgeführt. Als

Versuchsanordnung diente ein Immersionsversuch mit vollständig getauchten Testprobein in einer belüfteten mit 250 Umdrehungen pro Minute gerührten Lösung des Inhibitors.

Als Elektrolytlösungen wurden (A) Leitungswasser mit 18° fr. H., (b) vollentsalztes Wasser mit 3 % NaCl und (C) Aethylenglykol/Wasser (55 : 45) verwendet, denen eine Zusammensetzung gemäss Tabelle 2 zugesetzt wurde.

Als Testmaterial wurde Baustahl U St 37-1 der Kupferwerkstoff Nr. 20060 gemäss DIN 17007 sowie Hüttenzink und Reinaluminium (99,9) verwendet. Die Korrosion wurde bei allen genannten Materialien sehr stark vermindert.

Die Konzentrationen betrugen im Leitungswasser (a) und Aethylenglykol/Wasser-Gemisch (c) : 0,5 g/l der Zusammensetzung Nr. 16, Tabelle 2 ; im vollentsalzten Wasser mit 3 % NaCl : 1,0 g/l der Zusammensetzung Nr. 16 der Tabelle 2.

Analoge Ergebnisse erhält man mit Konzentrationen für die Fälle (a) und (b) von 1,0 g/l und für den Fall (c) mit 2,0 g/l.

Die weiteren in den Tabellen 2 und 3 aufgeführten Zusammensetzungen verwendet man in analoger Weise, wobei sehr gute Resultate erhalten werden.

Tabelle 1

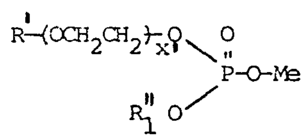

| Nr. | R' | $R_1''$ | x' | Me |
|---|---|---|---|---|
| 1 | $C_{13}H_{27}$ | $C_4H_9$ | 7 | Na |
| 2 | $C_{13}H_{27}$ | $C_3H_7$ | 9 | K |
| 3 | $C_{13}H_{27}$ | $C_3H_7$ | 9 | Zn |
| 4 | $C_{15}H_{31}$ | $C_4H_9$ | 7 | Na |

(Siehe Tabelle 2, Seite 7 f.)

Tabelle 2 (die Zahlen bedeuten Gewichtsprozente)

| Nr. | 13 | 14 | 15 | 16 | 17 | 18 | 19 | 20 | 21 | 22 | 23 | 24 |
|---|---|---|---|---|---|---|---|---|---|---|---|---|
| Verb. Nr. 1 der Tabelle 1 | 10 | 10,5 | 11,8 | 11,5 | 12 | 12 | 30 | 80 | 50 | 20 | 10 | 15 |
| Na-Merkaptobenzothiazol | 12,5 | 12,5 | 10,0 | 10,0 | 12,5 | 10 | 20 | 5 | 10 | 5 | 20 | 10 |
| $Zn(NO_3)_2$ | 0,006 | 0,006 | 0,006 | 0,006 | 0,006 | 0,006 | 0,06 | 0,6 | 0,006 | 0,006 | 0,006 | 0,03 |
| Monoäthanolamin | 8,0 | 8,0 | 6,5 | 6,5 | 8,0 | 6,5 | 10 | 5 | 8 | 5 | 10 | 6,5 |
| 2,2-Dichloro-5,5-dihydroxydiphenylmethan | 8,0 | 10,0 | 8,0 | 8,0 | - | - | 4 | 5 | - | - | 20 | 3,2 |
| Na-Heptonat | 5,0 | - | 9,0 | 6,0 | 9,0 | 10,0 | 30 | 5 | 20 | 60 | 40 | - |
| Wasser | 36,5 | 36,6 | 31,1 | 35,0 | 35,5 | 36,5 | 6 | - | 12 | 10 | - | 62,6 |
| Na-Glukonat | - | - | - | - | - | - | - | - | - | - | - | 2,7 |

Tabelle 3 (die Zahlen bedeuten Gewichtsprozente)

| Nr. | 25 | 26 | 27 | 28 | 29 | 30 | 31 | 32 | 33 |
|---|---|---|---|---|---|---|---|---|---|
| Verbindung Nr. 1 Tabelle 1 | 4,0 | 40,0 | 40,0 | 50,0 | 40,0 | 35,0 | 45,0 | 4,0 | 40,0 |
| Benzotriazol | 10,0 | 10,0 | 10,0 | 20,0 | 10,0 | 15,0 | 10,0 | 20,0 | 20,0 |
| Na-Borcheptonat | 22,0 | 25,0 | 22,0 | 20,0 | 20,0 | 22,0 | 30,0 | 30,0 | 20,0 |
| $Zn(NO_3)_2$ | 0,06 | 0,006 | 0,03 | 0,006 | 0,03 | 0,006 | 0,06 | 0,06 | 0,03 |
| Monoäthanolamin | 6,5 | 5,0 | 6,5 | 10,0 | 6,5 | 9,0 | 6,5 | 10,0 | 10,0 |
| 2,2-Dichloro-5,5-dihydroxydiphenol | 8,0 | 8,0 | 8,0 | - | 8,0 | 8,0 | - | - | - |
| Wasser | 39,5 | 12,0 | 13,5 | - | 10,0 | 8,0 | - | 26,0 | - |
| nichtionogenes Tensid | 10,0 | - | - | - | 5,0 | 3,0 | 8,5 | 10,0 | 10,0 |

**Ansprüche**

1. Verwendung von Phosphorsäurediestern der Formel

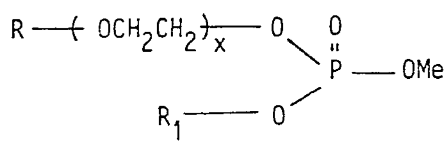

(I)

worin

R Alkyl($C_{8-18}$),
$R_1$ Alkyl($C_{1-5}$),
x 3-12 und
Me Na, K, 1/2 Ca oder 1/2 Zn

bedeuten, gegebenenfalls in Gegenwart von Mercaptobenzothiazolverbindungen und/oder Benzotriazolverbindungen und/oder Natriumboroheptonat und/oder Zinksalzen, zur Verminderung der Korrosion vom Sauerstofftypus bei metallischen Werkstoffen.

2. Verwendung nach Anspruch 1 von Verbindungen der Formel

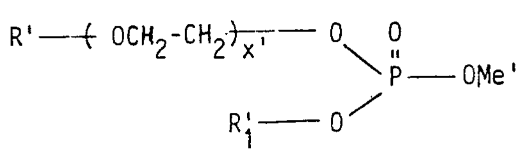

(Ia)

worin

R' Alkyl($C_{12-16}$)
$R_1$' Alkyl($C_{2-4}$)

x′ 6-9 und
Me′ Na, K oder 1/2 Zn
bedeuten.

3. Verwendung nach Anspruch 2 von Verbindungen der Formel

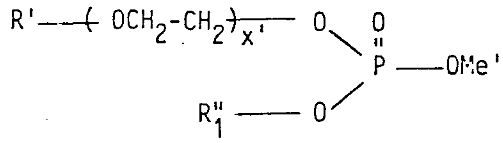

(Ib)

worin
R′ Alkyl($C_{12-16}$),
$R_1''$ Alkyl($C_{3,4}$),
x′ 6-9 und
Me′ Na, K oder 1/2 Zn
bedeuten.

4. Verwendung der Verbindungen der Formel (I) nach einem der Ansprüche 1-3 in Gegenwart von Mitteln zur Einstellung des pH-Wertes, Bioziden, Mitteln zur Verhinderung der Krustenbildung auf den zu schützenden Metallteilen, leicht oxydierend wirkenden Agenzien und/oder Netzmitteln.

5. Verwendung nach einem der Ansprüche 1-4 als Korrosionsinhibitoren insbesondere für Kupfer, Eisen, Zink, Aluminium und solche Metalle enthaltende Werkstoffe.

6. Verwendung nach Anspruch 5 in Elektrolyten mit schwach saurem bis schwach basischem Charakter.

7. Verfahren zur Verminderung der Korrosion vom Sauerstofftypus bei metallischen Werkstoffen in Elektrolyten mit schwach saurem bis schwach alkalischem Charakter, dadurch gekennzeichnet, dass man diesen Electrolyten mindestens eine Verbindung der Formel (I) nach einem der Ansprüche 1-3 und gegebenenfalls weitere Verbindungen nach Anspruch 4 zusetzt.

8. Verfahren zur Herstellung der Verbindungen der Formel (I) nach Anspruch 1, dadurch gekennzeichnet, dass man 1 Mol $POCl_3$ mit je 1 Mol der Verbindungen

$$R(OCH_2CH_2)_x\text{-}OH \qquad (II)$$

und

$$R_1\text{—}OH \qquad (III)$$

nacheinander in beliebiger Reihenfolge unter Abspaltung von 2 Mol HCl umsetzt und das erhaltene Produkt, gegebenenfalls unter gleichzeitiger Umwandlung in das entsprechende Salz gemäss der Bedeutung von Me, hydrolysiert.

9. Mittel zur Verminderung der Korrosion vom Sauerstofftypus bei metallischen Werkstoffen, dadurch gekennzeichnet, dass dieses eine Verbindung der Formel (I) nach einem der Ansprüche 1-3 sowie gegebenenfalls weitere Zusatzstoffe nach Anspruch 4 enthält.

10. Verfahren zum temporären Schützen von blanken Metallteilen, dadurch gekennzeichnet, dass man auf diese eine Verbindung der Formel (I) nach einem der Ansprüche 1-3 mit gegebenenfalls weiteren Zusatzstoffen nach Anspruch 4, vorzugsweise aus einer wässrigen oder wässrig-öligen Suspension, aufbringt.

11. Schaumlöschzusammensetzung, dadurch gekennzeichnet, dass diese eine Verbindung nach einem der Ansprüche 1-3 und gegebenenfalls weitere Zusatzstoffe nach Anspruch 4 enthält.

12. Verfahren zur Korrosionshemmung von Maschinenteilen bei der Papierherstellung, dadurch gekennzeichnet, dass man eine Fasersuspension verwendet, welche eine Verbindung der Formel (I) nach einem der Ansprüche 1-3 und gegebenenfalls weitere Zusatzstoffe nach Anspruch 4 enthält.

**Claims**

1. Use of phosphoric acid diesters of formula I

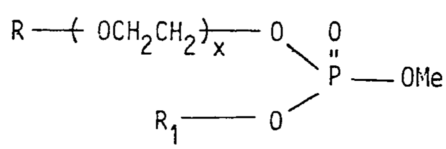

(I)

in which

R is alkyl($C_{8-18}$)
$R_1$ is alkyl($C_{1-5}$)
x is 3-12 and
Me is Na, K, 1/2 Ca or 1/2 Zn

optionally in the presence of mercaptobenzothiazole compounds and/or benzotriazole compounds and/or sodium boroheptonate and/or zinc salts,
for reducing the oxidative corrosion of metallic materials.

2. Use according to Claim 1 of compounds of formula Ia

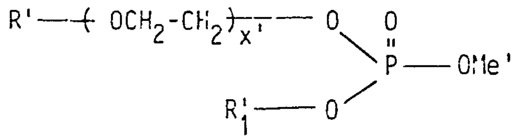
(Ia)

in which
R' is alkyl($C_{12-16}$)
$R'_1$ is alkyl($C_{2-4}$)
x' is 6-9 and
Me' is Na, K or 1/2 Zn.

3. Use according to Claim 2 of compounds of formula Ib

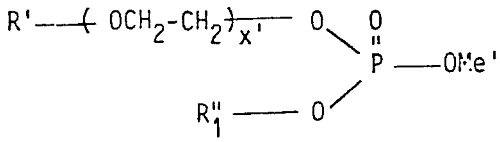
(Ib)

in which
R' is alkyl($_{12-16}$)
$R_1''$ is alkyl($C_{3,4}$)
x' is 6-9 and
Me' is Na, K or 1/2 Zn.

4. Use of compounds of formula I according to any one of Claims 1-3 in the presence of pH-adjusting agents, biocides, agents inhibiting scale formation on the metallic parts to be protected, mild oxidising agents and/or wetting agents.

5. Use according to any one of Claims 1-4 as corrosion inhibitors, particularly for copper, iron, zinc, aluminium or materials containing such metals.

6. Use according to Claim 5 in electrolytes having a weakly acidic to weakly basic character.

7. A process for reducing the oxidative corrosion of metallic materials in electrolytes having a weakly acidic to weakly basic character, characterised in that at least one compound of formula I as stated in any one of Claims 1-3 and optionally further compounds according to Claim 4, are added to these electrolytes.

8. A process for the production of compounds of formula I according to Claim 1, characterised in that 1 mol $POCl_3$ is reacted successively and in any sequence with 1 mol of each compound

$$R(OCH_2CH_2)_x OH \quad (II)$$

and

$$R_1—OH \quad (III)$$

with elimination of two mols HCl and the resulting product is hydrolysed optionally with simultaneous conversion into the corresponding salt according to the significance of Me.

9. An agent for reducing the oxidative corrosion of metallic materials, characterised in that it contains a compound of formula I as stated in any one of Claims 1-3 and optionally further additives according to Claim 4.

10. A process for temporary protection of clean metallic parts, characterised in that a compound of formula I as stated in any one of Claims 1-3 optionally with further additives according to Claim 4 is applied thereto, preferably from an aqueous or aqueous-oily suspension.

11. An extinguishing foam composition, characterised in that it contains a compound according to any one of Claims 1-3 and optionally further additives according to Claim 4.

12. A process for the inhibition of corrosion of machine parts in paper manufacture characterised in that a fibre suspension containing a compound of formula I as stated in any one of Claims 1-3 and optionally further additives according to Claim 4 is used.

**Revendications**

1. Utilisation de di-esters de l'acide phosphorique de formule

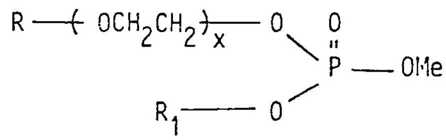

(I)

dans laquelle

R signifie alkyle en $C_8$-$C_{18}$,

$R_1$ signifie alkyle en $C_1$-$C_5$,

x signifie 3-12 et

Me signifie Na, K, 1/2 Ca ou 1/2 Zn,

éventuellement en présence de composés mercaptobenzothiazoliques et/ou de composés benzotriazoliques et/ou de boroheptonate de sodium et/ou de sels de zinc, pour séduire la corrosion oxydante des matériaux métalliques.

2. Utilisation selon la revendication 1 de composés de formule

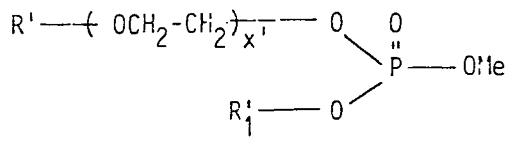

(Ia)

dans laquelle

R' signifie alkyle en $C_{12}$-$C_{16}$,

$R_1'$ signifie alkyle en $C_2$-$C_4$,

x' signifie 6-9 et

Me' signifie Na, K ou 1/2 Zn.

3. Utilisation selon la revendication 2 de composés de formule

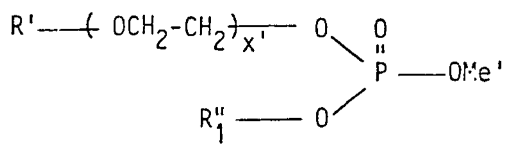

(Ib)

dans laquelle

R' signifie alkyle en $C_{12}$-$C_{16}$,

$R_1''$ signifie alkyle en $C_3$-$C_4$,

x' signifie 6-9 et

Me' signifie Na, K ou 1/2 Zn.

4. Utilisation des composés de formule I selon une des revendications 1 à 3 en présence d'agents pour régler le pH, de biocides, d'agents pour inhiber la formation de croûtes sur les parties métalliques à protéger, d'agents ayant une action légèrement oxydante et/ou de mouillants.

5. Utilisation selon une des revendications 1 à 4 comme inhibiteurs de corrosion en particulier pour le cuivre, le fer, le zinc, l'aluminium et des matériaux contenant de tels métaux.

6. Utilisation selon la revendication 5 dans des électrolytes ayant un caractère faiblement acide à faiblement basique.

7. Procédé pour réduire la corrosion oxydante des matériaux métalliques dans des électrolytes ayant un caractère faiblement acide à faiblement basique, caractérisé en ce qu'on ajoute à ces électrolytes au moins un composé de formule I selon une des revendications 1 à 3 et éventuellement d'autres composés selon la revendication 4.

8. Procédé de préparation des composés de formule I selon la revendication 1, caractérisé en ce qu'on fait réagir une mole de $POCl_3$ avec une mole de chacun des composés

$$R(OCH_2CH_2)_x OH \quad (II)$$

et

$$R_1{-}OH \quad (III)$$

l'un après l'autre dans un ordre quelconque avec élimination de deux moles de HCl, et on hydrolyse le produit obtenu, éventuellement avec transformation simultanée en sel correspondant selon la signification de Me.

9. Agent pour réduire la corrosion oxydante des matériaux métalliques, caractérisé en ce qu'il contient un composé de formule I selon une des revendications 1 à 3 ainsi que, le cas échéant, d'autres additifs selon la revendication 4.

10. Procédé de protection temporaire de parties métalliques polies, caractérisé en ce qu'on applique sur celles-ci un composé de formule I selon une des revendications 1 à 3 avec éventuellement d'autres additifs selon la revendication 4, de préférence à partir d'une suspension aqueuse ou aqueuse/huileuse.

11. Composition pour extincteur à mousse, caractérisé en ce qu'elle contient un composé selon une des revendications 1 à 3 et éventuellement d'autres additifs selon la revendication 4.

12. Procédé pour inhiber la corrosion d'éléments de machine dans la préparation du papier, caractérisé en ce qu'on utilise une suspension de fibre qui contient un composé de formule I selon une des revendications 1 à 3 et éventuellement d'autres additifs selon la revendication 4.